# EUROPÄISCHE PATENTANMELDUNG

(11) **EP 0 544 227 A1**
(43) Veröffentlichungstag der Anmeldung: **02.06.1993**
(21) Anmeldenummer: 92119983.2
(22) Anmeldetag: 24.11.1992
(51) Int. Cl.: C02F 1/52, C02F 11/12, B01D 21/26

(54) **Verfahren zur kontinuierlichen Schlammeindickung über Hydrozyklone**

(30) Priorität: 25.11.1991 DE 4138669
(71) Anmelder: SÜD-CHEMIE AG, D-80333 München (DE)
(72) Erfinder: Huber, Anton, Dipl.-Ing., W-8050 Freising (DE)
(74) Vertreter: Reitzner, Bruno, Dr.

(57) **Zusammenfassung**

Es wird ein Verfahren zum kontinuierlichen Eindicken von Klärschlamm beschrieben, das dadurch gekennzeichnet ist, daß man
(a) den Klärschlamm aus einem Schlammbehälter bzw. einem Nachklärbecken mit einer Lösung von Salzen mehrwertiger Metalle in einer Menge von 1-10 l je m³ Klärschlamm (bezogen auf eine 15 gew.%ige Lösung) und/oder mit einem kationischen oder anionischen organischen Flockungsmittel auf der Basis von kationischen oder anionischen Kohlenhydraten oder synthetischen kationischen oder anionischen Polyelektrolyten in einer Menge von 1-500 kg je m³ Klärschlamm verschmischt und
(b) das erhaltene Gemisch durch einen Hydrozyklon leitet und die Feinablaufphase sowie die Schlammphase aus dem Hydrozyklon in der üblichen Weise aufarbeitet.

## Beschreibung

Die Erfindung betrifft ein Verfahren zum kontinuierlichen Eindicken von Klärschlamm.

Bisher wurde Klärschlamm aus Schlammbehältern bzw. Nachklärbecken üblicherweise mit Hilfe von statischen Eindickern, Siebbandpressen oder Zentrifugen eingedickt. Diese Verfahren waren aber unbefriedigend oder teuer, da sie keine schnelle und wirksame Abtrennung des Schlammes von der wäßrigen Phase ermöglichten, insbesondere wenn der Klärschlamm einen hohen Anteil an kolloidal dispergierten Substanzen enthielt.

Aus der DE-A-37 02 269 ist ein Hydrozyklon zur Aufbereitung von Schlämmen und Abwässern bekannt, der innen einen flexiblen Balg bzw. einen mantelartigen Wandteil enthält, der durch ein Druckmittel aufblähbar ist. Auf diese Weise kann die Abtrennung der Verunreinigungen besser gesteuert werden. Über eine vorherige Aufbereitung der Schlämme ist jedoch nichts gesagt.

Ein Verfahren zur Trennung von Feststoffanteilen in einer schlammartigen Masse mit Hilfe eines Hydrozyklons ist auch aus der DE-A-35 19 131 bekannt. Der Einsatz chemischer Reagenzien soll jedoch bei diesem Verfahren vermieden werden.

Aus der DE-A-37 00 725 ist weiterhin ein Verfahren und eine Anlage zur Reinigung von Feinschlamm führenden Rohabwasser bekannt, wobei das Rohabwasser mit einem Flockungsmittel, nicht aber der Schlamm mit einem Flockungsmittel versetzt wird. Der geflockte Feinschlamm wird in eine Zyklonstufe eingeführt.

Aus der DE-A-36 20 700 ist ein Verfahren und eine Vorrichtung zum Entschlammen von Gewässern bekannt, wobei die Grobbestandteile mit Hilfe eines Hydrozyklons abgetrennt werden. Die in Wasser gelösten Phosphate werden durch Fe(III)-Chloridsulfat oder Fe(II)-Sulfat ausgefällt, d.h. diese Salze werden nicht zur Flockung von Schlamm verwendet.

Aus der DE-A-36 14 865 ist eine Vorrichtung zur Aufbereitung, Entwässerung und Beseitigung von Schlämmen bekannt, bei der Faulschlamm in einem Hydrozyklon abgetrennt wird. Es wird aber keine Schlammflockung mit Chemikalien durchgeführt.

Aus der DE-A-26 58 347 ist es bekannt, schwere Bestandteile aus einer Flüssigkeit, wie Abwasser, mit Hilfe eines belüfteten Hydrozyklons abzusetzen. Die Zugabe von Chemikalien ist nicht erwähnt.

Aus der DE-A-20 16 342 ist schließlich ein Hydrozyklon zur Schlammeindickung bekannt. Hierbei werden ebenfalls keine Chemikalien zugesetzt.

Der Erfindung lag die Aufgabe zugrunde, ein Verfahren zum kontinuierlichen Eindicken von Klärschlamm bereitzustellen, das eine schnelle und wirksame Abtrennung der Schlammphase von der wäßrigen Phase ermöglicht.

Diese Aufgabe wird erfindungsgemäß dadurch gelöst, daß man
(a) den Klärschlamm aus einem Schlammbehälter bzw. einem Nachklärbecken mit einer Lösung von Salzen mehrwertiger Metalle in einer Menge von 1-10 l/m³ Klärschlamm (bezogen auf eine 15 gew.%ige Lösung) und/oder mit einem kationischen oder anionischen organischen Flockungsmittel auf der Basis von kationischen oder anionischen Kohlenhydraten oder synthetischen kationischen oder anionischen Polyelektrolyten in einer Menge von 1-500 kg/m³ Klärschlamm verschmischt und
(b) das erhaltene Gemisch durch einen Hydrozyklon leitet und die Feinablaufphase sowie die Schlammphase aus dem Hydrozyklon in der üblichen Weise aufarbeitet.

Bei dem erfindungsgemäßen Verfahren kommt es also im Gegensatz zu bekannten Verfahren darauf an, daß man den Klärschlamm vor der Behandlung im Hydrozyklon mit größeren Mengen an Salzen mehrwertiger Metalle und/oder Flockungsmitteln vermischt.

Hydrozyklone sind konische Geräte, in denen Suspensionen ohne rotierende Apparateteile durch tangentiales Einströmen in Rotation versetzt werden. Man hat Hydrozyklone bisher zum Trennen, Eindicken und Entwässern flüssiger Suspensionen und Schlämme verwendet, nicht aber zur Abscheidung von z.T. kolloidal dispergierten Schwebstoffen in Abwässerschlämmen. Der Grund hierfür war wahrscheinlich folgender: in einem Hydrozyklon induziert die tangential einströmende Flüssigkeit eine starke Wirbelströmung,die ein Absitzen der kolloidal dispergierten Schwebstoffe verzögert. Überraschenderweise wurde jedoch gefunden, daß sich derartige Schwebstoffe bei den üblichen Betriebsbedingungen der Hydrozyklone leicht abscheiden lassen.

Ein Hydrozyklon ist ein sehr kompaktes Gerät, das wenig Platz beansprucht, aber andererseits in der Lage ist, in einer bestimmten Zeit große Flüssigkeitsmengen zu verarbeiten.

Mit Hilfe eines Hydrozyklons ist also eine dezentrale Eindickung von Klärschlamm möglich, d.h. auch kleine Betriebe können auf ihrem Gelände einen Hydrozyklon installieren.

Die Feinablaufphase aus dem Hydrozyklon kann üblicherweise noch nicht in den Vorfluter geleitet werden, insbesondere wenn der chemische Sauerstoffbedarf (CSB) noch verhältnismäßig hoch ist. Die Feinablaufphase wird daher zweckmäßig in üblicher Weise in ein biologisches Klärbecken oder in ein Vorklärbecken geleitet, bevor sie in den Vorfluter geleitet wird. Die Schlammphase kann in üblicher Weise entweder unmittelbar der landwirtschaftlichen Verwertung zugeführt werden (wenn der Gehalt an Schadstoffen, wie Schwermetallen, Phenolen und Chlorkohlenwasserstoffen niedrig ist) oder aber sie kann zunächst in einem Faulturm unter anaeroben Bedingungen unter Erzeugung von Biogas ausgefault werden. Weiterhin kann die Schlammphase vorher entweder durch Filtration oder durch Zentrifugieren entwässert werden.

Der zu behandelnde Klärschlamm wird vorzugsweise auf einen pH-Wert von 0,5 bis 9, insbesondere von 7 bis 8, eingestellt.

Nach einer bevorzugten Ausführungsform des erfindungsgemäßen Verfahrens wird der Klärschlamm vor dem Einführen in den Hydrozyklon mit einer Lösung von Al-, Fe(II)- oder -(III)-, Ca- und/oder Mg-Salzen, insbesondere von Chloriden, die gegebenenfalls auch kolloidale Kieselsäure enthält, vermischt.

Vorzugsweise wird die Lösung der Salze der mehrwertigen Metalle in einer Menge von etwa 2 l je m³ Klärschlamm (bezogen auf eine 15 gew.-%ige Lösung) verwendet.

Das kationische oder anionische organische Flockungsmittel wird vorzugsweise in einer Menge von 10 bis 50 kg je m³ Klärschlamm als 0,1 gew.%-ige Lösung zugesetzt.

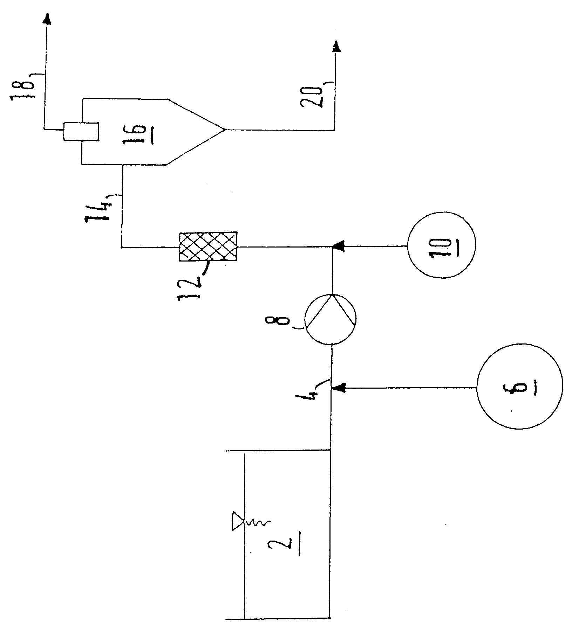

Die Erfindung ist nachstehend anhand der Zeichnung erläutert:
Aus einem Schlammbehälter bzw. Nachklärbecken 2 wird der Klärschlamm über die Leitung 4 zu einer Pumpe 8 geführt. In die Leitung 4 wird eine Lösung von Salzen mehrwertiger Metalle aus dem Behälter 6 eingespeist. Nach der Pumpe 8 wird aus einem Behälter 10 ein kationisches oder anionisches organisches Flockungsmittel eingespeist. Die Mischung wird im Statikmischer 12 homogenisiert und wird anschließend über den Zulauf 14 in den Hydrozyklon eingeleitet. Die Feinphase tritt aus dem Ablauf 18 aus dem Hydrozyklon aus. Sie kann üblicherweise noch nicht in den Vorfluter geleitet werden, sondern wird zunächst in die biologische Vorklärung oder in ein Vorklärbecken geleitet.

Die aus der Leitung 20 austretende eingedickte Schlammphase kann entweder unmittelbar der landwirtschaftlichen Verwertung zugeführt werden, wenn ihr Schadstoffgehalt niedrig ist. Sie kann aber auch entwässert und konditioniert werden, beispielsweise indem sie nochmals mit einer Lösung von Salzen mehrwertiger Metalle und/oder einem kationischen organischen Flockungsmittel behandelt wird. Weiterhin kann die eingedickte Schlammphase zur anaeroben Behandlung unter Erzeugung von Biogas in einen Faulturm geleitet werden. Die Entwässerung der Schlammphase kann durch Filtration oder Zentrifugation erfolgen. Mann kann aber auch zur Entwässerung einen weiteren Hydrozyklon verwenden.

Die in der Zeichnung dargestellte Anlage wurde unter folgenden Bedingungen gefahren:
- Feststoffgehalt des Klärschlamms im Behälter 2 = 4 g/l
- chemischer Sauerstoffbedarf des Klärschlamms
   im Behälter 2 = 800 mg O₂/l
- Schlammenge = 25 m³/Stunde
- Lösung von Salzen mehrwertiger Metalle aus dem Behälter 6:
   Fe(III) 7 mg/l
   Al 11 mg/l
   Ca 3 mg/l
   Mg 3 mg/l
- pH-Wert der Lösung = 0,5
- Menge der Lösung = 25 l/Stunde (15 %ige Lösung)
- Organisches Flockungsmittel: kationisches Copolymer aus Acrylamid und Acrylsäureaminoester
- Menge des organischen Flockungsmittels = 25 g/m³ Schlamm
- Eingangsdruck am Hydrozyklon = 2 bar
- Feststoffgehalt der Feinablaufphase in Leitung 28 = 0,2 g/l
- CSB der Feinablaufphase in der Leitung 18 = 120 mg O₂/l
- Feststoffgehalt der Schlammphase in der Leitung 20 = 80 g/l
- CSB der Schlammphase in der Leitung 20 = 3800 mg O₂/l

## Patentansprüche

1. Verfahren zum kontinuierlichen Eindicken von Klärschlamm, dadurch gekennzeichnet, daß man
(a) den Klärschlamm aus einem Schlammbehälter bzw. einem Nachklärbecken mit einer Lösung von Salzen mehrwertiger Metalle in einer Menge von 1-10 l je m³ Klärschlamm (bezogen auf eine 15 gew.%ige Lösung) und/oder mit einem kationischen oder anionischen organischen Flockungsmittel auf der Basis von kationischen oder anionischen Kohlenhydraten oder synthetischen kationischen oder anionischen Polyelektrolyten in einer Menge von 1-500 kg je m³ Klärschlamm verschmischt und
(b) das erhaltene Gemisch durch einen Hydrozyklon leitet und die Feinablaufphase sowie die Schlammphase aus dem Hydrozyklon in der üblichen Weise aufarbeitet.

2. Verfahren nach Anspruch 1, dadurch gekennzeichnet, daß man den zu behandelnden Klärschlamm auf einen pH-Wert von 6,5 bis 9, vorzugsweise von 7 bis 8, einstellt.

3. Verfahren nach Anspruch 1 oder 2, dadurch gekennzeichnet, daß man eine Lösung von Al-, Fe(II)- oder -(III)-, Ca- und/oder Mg-Salzen, insbesondere der Chloride verwendet, die gegebenenfalls noch kolloidale Kieselsäure enthält.

4. Verfahren nach einem der Ansprüche 1 bis 3, dadurch gekennzeichnet, daß man die Lösung der Salze der mehrwertigen Metalle in einer Menge von etwa 2 l je m³ Klärschlamm (bezogen auf eine 15 gew.-%ige Lösung) verwendet.

5. Verfahren nach einem der Ansprüche 1 bis 4, dadurch gekennzeichnet, daß man das kationische oder anionische organische Flockungsmittel in Mengen von 10 bis 50 kg je m³ Klärschlamm zusetzt.
